# EUROPEAN PATENT SPECIFICATION

(11) **EP 1 126 999 B1**
(45) Date of publication and mention of the grant of the patent: **11.09.2002**
(21) Application number: 99954090.9
(22) Date of filing: 27.10.1999
(51) Int. Cl.: B62D 55/275

(54) **ARTICULATED VEHICLE TRACK COMPONENTS**
GELENKIGE RAUPENKETTENTEILE FÜR FAHRZEUG
ELEMENTS DE CHENILLES ARTICULEES POUR VEHICULE

(30) Priority: 05.11.1998 GB 9824219
(43) Date of publication of application: 29.08.2001
(73) Proprietor: William Cook Cast Products Limited, Bishop Auckland, County Durham DL13 2YR (GB)
(72) Inventor: Kite, Philip John, Stocksfield, Northumberland NE43 7UL (GB)
(74) Representative: Harrison Goddard Foote
(86) International application number: GB9903501
(87) International publication number: WO00027687

(56) References cited:
- WO-A-95/05947
- DE-A- 3 335 937
- US-A- 4 444 441

## Description

The present invention relates to articulated vehicle tracks and to components thereof, and in particular to the ground contacting components of such articulated vehicle tracks.

Conventional tracks generally comprise a series of track links. Each track link will typically comprise a link plate divided into two sections separated by a spine, each of which sections receives a ground contacting component. Each side of the track link is bored through to allow the passage of elongate track pins. End connectors are used to join individual track links together, thereby to form the links into a track, by clamping together the ends of adjacent track pins. For smaller, lighter weight vehicles, the track link may be in a single section with a single ground contacting component. Adjacent track links may be joined to a common track pin, so that there is, overall, one track pin per track link and the end connectors are not then required.

Contact between the track and the ground is established by means of replaceable ground contacting components. These components must be periodically replaced because of wear and it will often be necessary to exchange one type of ground contacting component for another type in accordance with the ground conditions.

There are two principal types of ground contacting component, that is, road pads and components variously known as grousers, crampons, mud-grips or ice-rakes. Road pads are mainly used when the vehicle is travelling over hard surfaces such as ordinary roads and where there is adequate grip in normal conditions. Contact with the ground is via a pad of rubber or other elastomeric material. Where the ground conditions are soft or where there is a lack of adhesion with the ground, such as in mud, snow, ice, sand and the like, grousers may be used. In grousers, the pad of elastomeric material is absent and gripping surfaces made of metal or other suitable hard material are provided. The gripping surfaces may be covered by a layer of elastomer.

It is readily apparent that under battlefield conditions, it is essential that road pads and grousers must be easily and quickly replaced or exchanged, especially as the necessary work may also need to be done in dark and/or cold conditions.

Various means of retaining ground contacting components in articulated vehicle track links are known. In our International patent application no WO 97/07011 a road pad is described which includes upstanding projections at either side of the pad, each including a through bore. The pad is retained on the track link by insertion of roll-pins through the respective bores, which roll-pins also engage bores in the track link.

Another type of construction is described in our International patent application no W096/29234 in which the pad includes laterally extending wings which engage grooves provided in the track link in order to retain the pad on the track link. A resilient member formed at the inner side of the pad acts as a latch contacting an abutment towards one end of the track link to prevent the pad from sliding out when engaged in the grooves.

Although generally successful, ground contacting components which are retained in track links by laterally extending wings which fit into grooves formed in the track link do have certain disadvantages. Firstly, there can be a considerable frictional resistance to the insertion or removal of the component, due to the friction between the laterally extending wings and the surfaces of the grooves which they engage. Further, considerable stress is generated in the pad at the point at which it begins to contact the ground. As the components moves on the track, the initial point of contact with the ground is along the lateral leading edge of the component so that all the forces resulting from contact with the ground are transmitted through this lateral edge. In some cases, the distortion of the component caused by these forces can be sufficient to allow the wings to become disengaged from their retaining grooves so that the component becomes separated from the track. Clearly, loss of a ground contacting component is disadvantageous to the efficient operation of the vehicle. More especially, when the vehicle is travelling at speed, the ground contacting component can fly off at high speed and cause serious injury to any nearby personnel.

The present invention seeks to alleviate or overcome these disadvantages.

We have now designed a further improved ground contacting component which facilitates removal or exchange by reducing the distance which the pad must be moved under load during removal or exchange. In particular, each ground contacting component includes one or more laterally projecting wings at each side which are adapted to engage corresponding grooves in the track link and thereby to retain the pad in the track link. In order to reduce the distance which the component must travel while under load during fitting or removal, the length of the wings at each side is less than the length of that side of the component. The component further includes a projection such as a tongue or a tang extending from the leading edge (with respect to the insertion direction) which engages a corresponding hole, slot or recess in the track link.

Accordingly, a first aspect of the present invention provides a ground contacting component for use in a track link of an articulated vehicle track, the component comprising a base portion and a ground contacting portion wherein the component includes at respective sides thereof at least one laterally projecting wing adapted to be received in a corresponding groove of a track link and a projecting tongue extending from an end thereof and adapted to be at least partially received in a corresponding recess of the track link, and wherein the wing or wings at each respective side of the pad have an overall length which is less than the length of the ground contacting component.

In a particularly preferred embodiment, the ground contacting component includes a single wing at each side. Preferably, the length of each wing is not more than half the length of the ground contacting component and most preferably the wings are formed at the rear half of the ground contacting component, with respect to the insertion direction.

In another form of the invention, the wings are formed integrally with the base portion. Alternatively, the wings may be formed integrally with an intermediate plate, which plate is disposed over the base portion. The intermediate plate most preferably takes the form of generally rectangular frame such that, where the ground contacting component is a grouser, the frame surrounds the ground contacting portion.

It is particularly preferred that a layer of elastomeric material is provided between the base portion and the intermediate plate in order to provide resilient cushioning between the intermediate plate and the base portion.

In an alternative preferred embodiment, the intermediate plate is fixedly attached to the base portion, the fixing being such that the intermediate plate is spaced apart from the base portion. In this way, some resilience is provided by means of the inherent resilience of the intermediate plate.

In another preferred embodiment of the invention, at least a leading part (with respect to the insertion direction) of the projecting tongue is curved raked or bent away from the ground contacting portion. This construction facilitates insertion of the tongue into the corresponding recess of the track link as the ground contacting component is inserted into the track link. The projecting tongue may be formed integrally with the base portion of the ground contacting component, or as an integral part of an intermediate plate.

In a second aspect of the invention there is provided a track link of an articulated vehicle track comprising a base portion, a drive receiving portion and means for articulatedly joining the track link to adjacent track links wherein the base portion includes a ground contacting component receiving portion defined by opposed side walls and an end wall, each of which opposed side walls includes a groove extending along at least part of the length thereof for receiving laterally projecting wings of the ground contacting component and a recess formed in said end wall for receiving the projecting tongue of the ground contacting component.

Preferably, the grooves extend over not more than half the length of the respective side wall and most preferably are formed in the portion of the side wall distant from the end wall.

A third aspect of the invention provides an articulated vehicle track including ground contacting components according to the first aspect of the invention and track links according to the second aspect of the invention.

For a better understanding of the invention and to show how the same may be carried into effect, reference will be made, by way of example only, to the following drawings, in which:

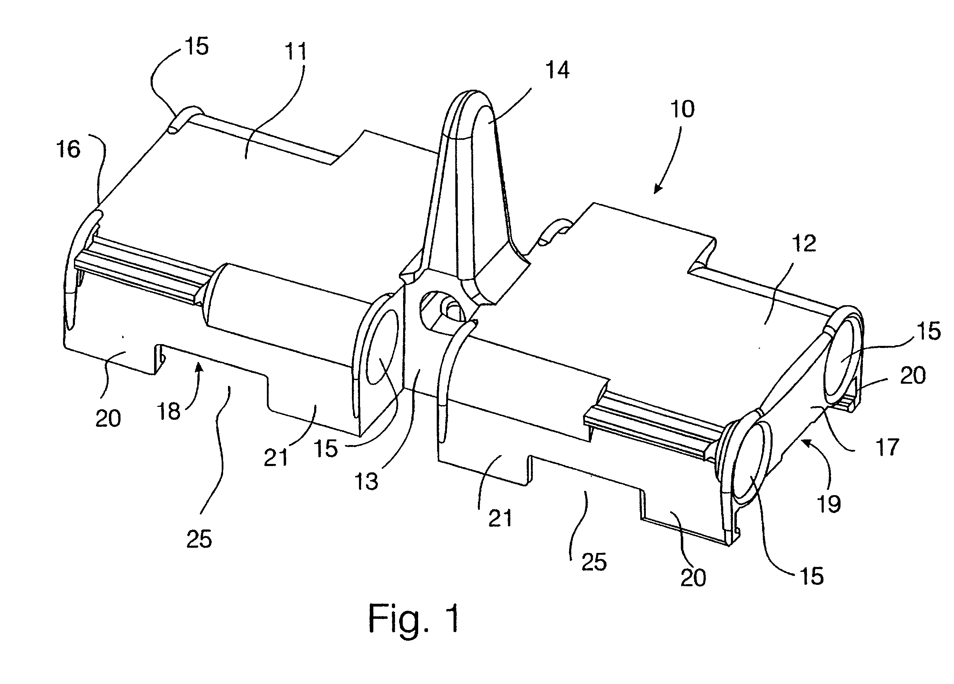

Figure 1 shows a perspective view from above of a track link according to the invention;
Figure 2 shows the track link of Figure 1 from below;
Figure 3 shows a road pad according to the invention, with the road contacting surface uppermost;
Figure 4 shows the pad of Figure 3 viewed from the other side;
Figure 5 shows a grouser according to the invention with the ground contacting part uppermost; and
Figure 6 shows the grouser of Figure 5 viewed from the other side.

Referring now to the drawings, a track link 10 includes sections 11 and 12 separated by a spine 13 which includes a shoulder 14 which provides lateral location of the track on the vehicle. Drive is transmitted to the track from a vehicle drive means (e.g. a sprocket wheel) which, according to the particular design, may act on the track at one of a number of points, such as the track pins or the end connectors.

The track link 10 further includes parallel bores 15 which receive track pins (not illustrated). The track pins project beyond each end 16, 17 of the track link and the track pins of adjacent track links are connected together to form an articulated track. The ground contacting components are fitted in ground contacting component receiving portions indicated generally at 18 and 19.

It will be appreciated that the present invention is equally applicable to track and track component designs having only one track pin per track link and no end connectors.

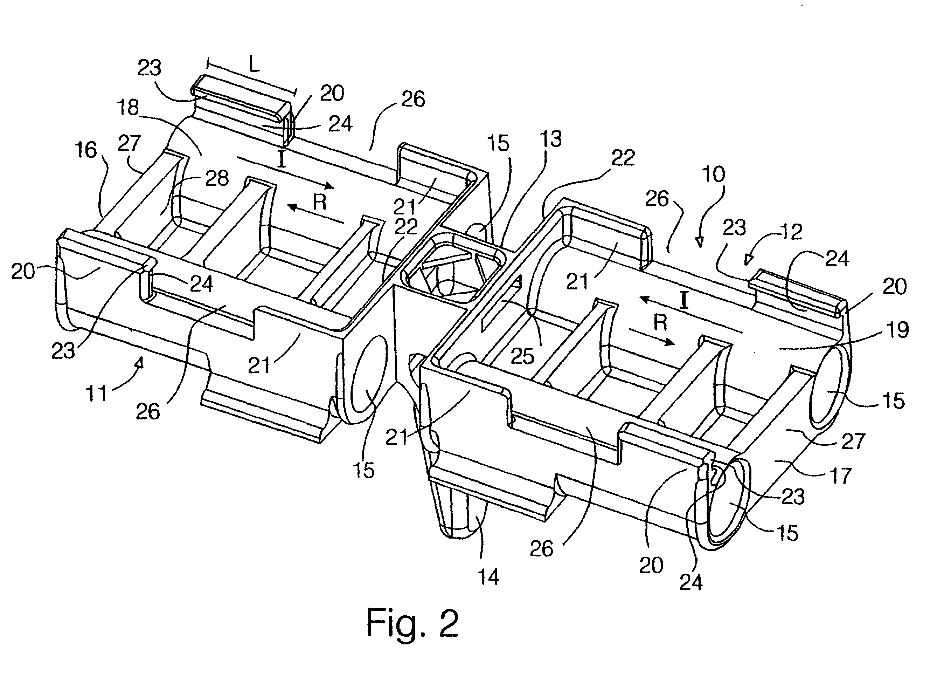

As can most clearly be seen from Figure 2, the regions 18, 19 which receive the ground contacting components are bounded by side walls 20, 21, and end wall 22 with an open face at track link ends 16, 17 through which the ground contacting components are received. The side walls 20 include a lip 23 which, together with the side walls 20, defines channels or grooves 24 which receive and retain the wings of the ground contacting component. The end walls 22 each include a recess 25 which may take the form of a slot or hole and which receives the tongue of the ground contacting component.

The side walls 20, 21 do not occupy the whole length of the respective ground contacting component receiving portions 18, 19 and spaces 26 are defined therebetween. Each side of the ground contacting component receiving portion may include more than one wall section 20 and/or 21 with or without spaces 26 therebetween, depending on the construction of the ground contacting component. For example, where the ground contacting component includes only a single wing at each side, defined at its rear end (with respect to the insertion direction) the space 26 may be absent such that the wall 20 is continuous with the wall 21. An alternative construction of the ground contacting component may, for example, provide two wings at each side disposed respectively toward the front and rear of the component. In this case, a space 26 which is at least as long as the length of the forward wings will be desirable to facilitate insertion of the ground contacting component. In this construction, the walls 21 may be replaced in the corresponding location by further walls 20.

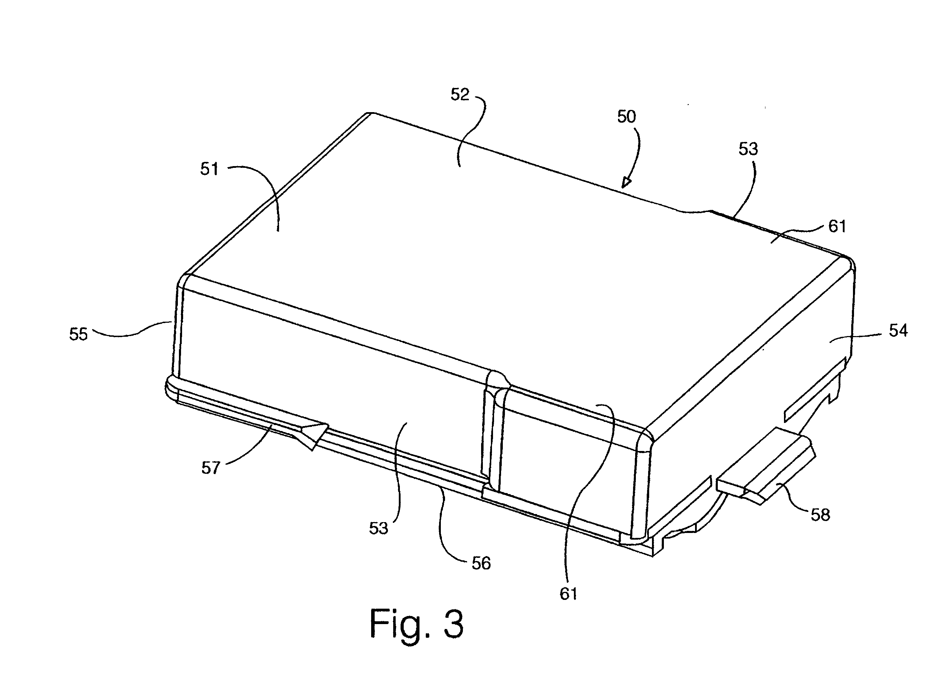

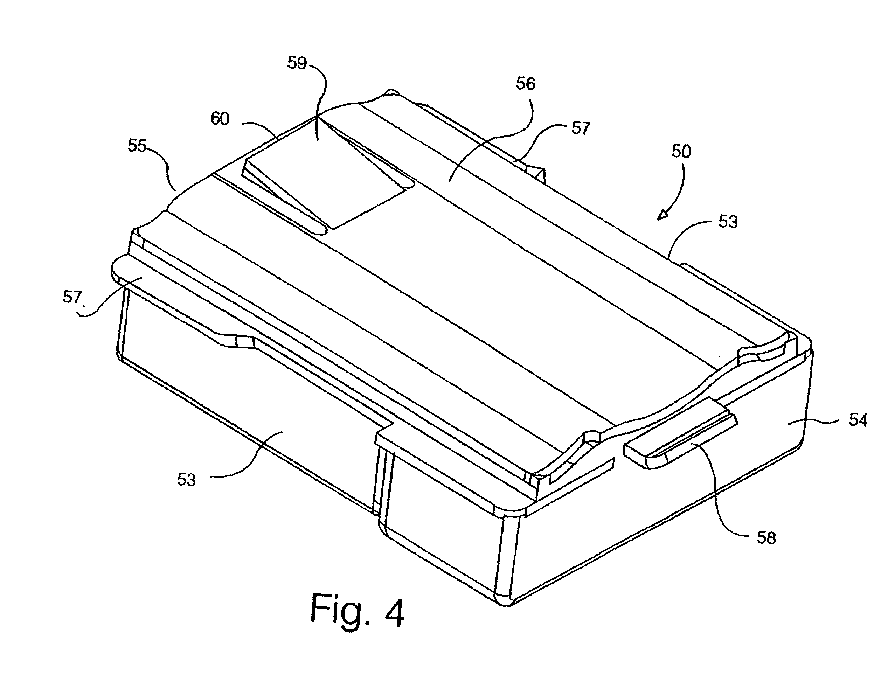

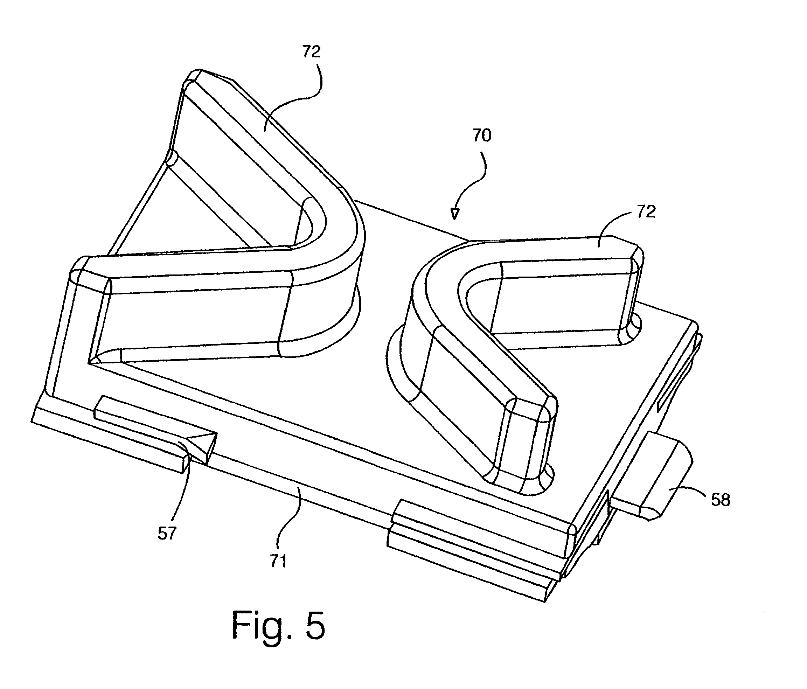

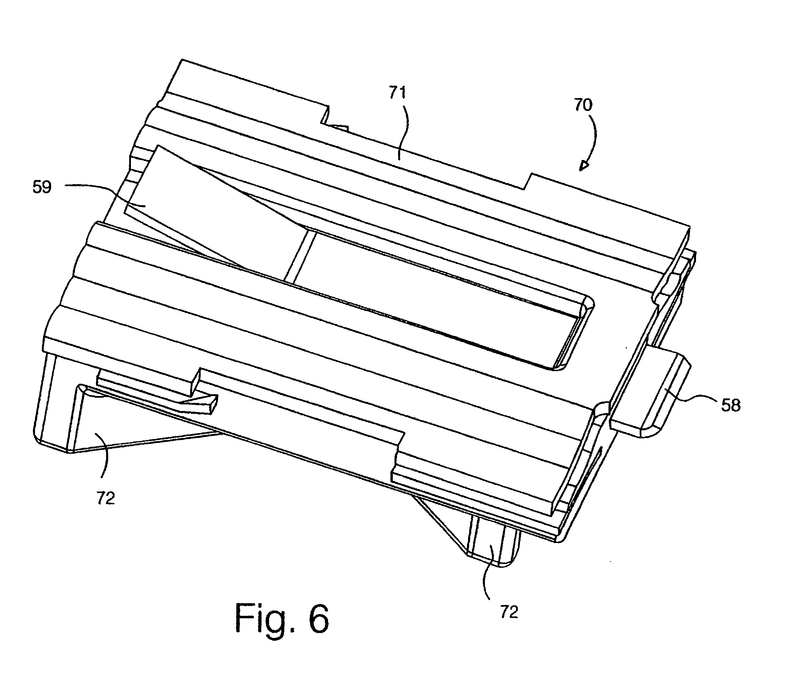

The ground contacting components fall generally into two types, that is, road pads as illustrated in Figures 3 and 4 and grousers as illustrated in Figures 5 and 6. Road pads 50 comprise a body 51 of elastomeric material having an outer surface 52 which contacts the ground, side walls 53 and end walls 54, 55. The elastomeric material is attached to a base portion 56 by means known in the art. The base portion 56 may preferably be made from metal or other suitably robust material. Laterally projecting wings 57 extend outwardly from the sides 53 of the road pad. The wings 57 may be formed integrally with the base portion 56 or may, for example, be formed as the extremities of an intermediate plate disposed between the base portion 56 and the body 51 of elastomeric material. The wings 57 are preferably made of metal, but other suitably robust materials may be considered.

The leading end 54 (with respect to the direction in which the pad is inserted into the track link 10) of the road pad 50 includes a formation 58 which projects outwardly in the form of a tongue, tang, finger or the like. The formation 58 is preferably formed integrally with the base portion 56, or with the intermediate plate, if present. As can be seen in Figures 3 and 4, the leading edge of the formation 58 is directed away from the ground contacting surface 52. This assists in locating the formation in the recess 25 during insertion of the pad.

The road pad 50 further includes a resilient latching tongue 59 which assists in retaining the road pad 50 in the track link 10.

In use, the road pad 50 is inserted into the pad receiving portion 18, 19 with the pad surface 52 facing outwardly and such that the wings 57 slide within the grooves or channels 24. The pad is made to slide generally in the direction of arrow I until the end wall 54 is proximate or abuts the inner face of wall 22. In this way, the formation 58 is received in the recess 25 which assists in the accurate location and retention of the pad. It will be appreciated that in contrast to the prior art where the wall of type 20 including channel-forming lip 23 extends for the whole length of the pad receiving portion, it is necessary only to slide the pad over a distance L corresponding to the length of a wall 20 (Fig 2). Not only is the distance which the pad must slide reduced, but the frictional resistance to sliding can also be lessened. In this way, insertion and removal of the pad is facilitated.

The formation 58 is effective in ensuring that the pad is retained in the track link. In comparison to a pad retained only by laterally projecting wings, the pad of the present invention has fewer degrees of freedom. Thus, even if distortion of the pad occurs under the stress of operation such that the wings at one side of the pad become dislodged from the corresponding groove, the formation 58 serves to retain the pad in the track link.

In order to prevent the road pad 50 from becoming displaced in use of the vehicle from the track 10 by movement in the direction of arrow R, the road pad 50 includes the resilient tongue 59. During insertion of the pad, the tongue 59 is depressed by the wall 27 of the track link 10 until such time as the road pad 50 is fully inserted. At this point, the tongue 59 resiliently returns to its original position such that its end face 60 abuts the face 28 of wall 27, thereby preventing movement of the pad in the direction of arrow R. In order to remove the pad, the tongue 59 is depressed by known means until it no longer latches against face 28.

One particular advantage which flows from the invention is that, where the road pad includes only one pair of wings 57 disposed towards the rear, the width of the pad may be increased at the leading end, such as in regions 61 in Figure 3. In this way, the overall surface area of the pad can be increased, leading to a reduction in wear.

With reference to figures 5 and 6 which illustrate the construction of a grouser 70, it will be noted that the features (including the wings 57 and formation 58) by means of which the grouser 70 is retained in the track link are generally similar to those of road pad 50 and function in the same manner and so will not be described again in detail. In general, the grouser comprises a base portion 71 from which depend ground contacting structures 72. Preferably the base portion 71 and the structures 72 are made of metal, but other suitably robust materials may be employed. The shape, size and number of the structures 72 is merely illustrative and may be varied considerably in accordance with design and use requirements.

## Claims

1. A ground contacting component (50,70) for use in a track link (10) of an articulated vehicle track, the component (50,70) comprising a base portion (56,71) and a ground contacting portion (51,72)) wherein the component (50,70) includes at respective sides (53) thereof at least one laterally projecting wing (57) adapted to be received in a corresponding groove (24) of a track link (10) and a projecting tongue (58) extending from an end (54) thereof and adapted to be at least partially received in a corresponding recess (25) of the track link (10), and wherein the wing or wings (57) at each respective side (53) of the component (50,70) have an overall length which is less than the length of the ground contacting component (50,70).

2. A component (50,70) as claimed in claim 1 which includes a single wing (57) at each side.

3. A component (50,70) as claimed in claim 2 wherein the length of each wing (57) is not more than half the length of the ground contacting component (50, 70).

4. A component (50,70) as claimed in claim 3 wherein the wings (57) are formed towards the end (55) of the ground contacting component (50,70) distant from the projecting tongue (58).

5. A component (50,70) as claimed in any preceding claim wherein the wings (57) are formed integrally with the base portion (56,71).

6. A component (50,70) as claimed in any of claims 1 to 4 further comprising an intermediate plate disposed over the base portion (56,71), and wherein the wings (57) are formed integrally with said intermediate plate.

7. A component (50,70) as claimed in claim 6 further comprising a layer of elastomeric material between the base portion (56,71) and the intermediate plate.

8. A component (50,70) as claimed in claim 6 wherein the intermediate plate is fixedly attached to the base portion (56,71) and is spaced apart from the base portion (56,71) by means of fixings.

9. A component (50,70) as claimed in any of claims 1 to 5 wherein the projecting tongue (58) is formed integrally with the base portion (56,71).

10. A component (50,70) as claimed in claim 6, 7 or 8 wherein the projecting tongue (58) is formed integrally with the intermediate plate.

11. A component (50,70) as claimed in any preceding claim wherein at least the leading part (with respect to the insertion direction) of the projecting tongue (58) is curved, bent or raked away from the ground contacting portion (51,72).

12. A track link (10) of an articulated vehicle track comprising a base portion (11,12), a drive receiving portion and means for articulatedly joining the track link (10) to adjacent track links (10) wherein the base portion (11,12) includes a ground contacting component receiving portion (18,19) defined by opposed side walls (20,21) and an end wall (22), each of which opposed side walls (20) includes a groove (24) extending along at least part of the length thereof for receiving laterally projecting wings of a ground contacting component (50,70) and a recess (25) formed in said end wall (22) for receiving a projecting tongue (58) of the ground contacting component (50,70).

13. A track link (10) as claimed in claim 12 wherein said grooves (24) extend over not more than half the length of the respective side wall (20,21).

14. An articulated vehicle track including ground contacting components (50,70) according to any of claims 1 to 10 and track links according to claim 12 or 13.

## Patentansprüche

1. Ein Boden-Berührungselement (50,70) zur Verwendung in einem Raupenglied (10) einer gelenkigen Raupenkette für Fahrzeuge, wobei das Element (50,70) ein Basisteil (56,71) und ein Boden-Berührungsteil (51,72) umfaßt, worin das Element (50,70) an dessen jeweiligen Seiten (53) mindestens einen seitlich vorstehenden Flügel (57), der angepaßt ist, um in einer entsprechenden Rille (24) eines Raupengliedes (10) aufgenommen zu werden, und eine vorstehende Zunge (58) enthält, die sich von dessen einem Ende (54) erstreckt und angepaßt ist, um mindestens teilweise in einer entsprechenden Ausnehmung (25) des Raupengliedes (10) aufgenommen zu werden, und worin der Flügel oder die Flügel (57) an jeder der jeweiligen Seite (53) des Elementes (50,70) eine Gesamtlänge aufweist, die kleiner als die Länge des Boden-Berührungselements (50,70) ist.

2. Ein Element (50,70) nach Anspruch 1, das einen Einzelflügel (57) an jeder Seite enthält.

3. Ein Element (50,70) nach Anspruch 2, worin die Länge jedes Flügels (57) nicht mehr als die halbe Länge des Boden-Berührungselementes (50,70) beträgt.

4. Ein Element (50,70) nach Anspruch 3, worin die Flügel (57) zum Ende (55) des Boden-Berührungselementes (50,70) gerichtet, entfernt von der vorstehenden Zunge (58), gebildet sind.

5. Ein Element (50,70) nach einem der vorhergehenden Ansprüche, worin die Flügel (57) einstückig mit dem Basisteil (56,71) gebildet sind.

6. Ein Element (50,70) nach einem der Ansprüche 1 bis 4, desweiteren umfassend eine Zwischenplatte, die über dem Basisteil (56,71) angeordnet ist und worin die Flügel (57) mit dieser Zwischenplatte einstückig gebildet sind.

7. Ein Element (50,70) nach Anspruch 6, desweiteren umfassend eine Schicht eines elastomeren Materials zwischen dem Basisteil (56,71) und der Zwischenplatte.

8. Ein Element (50,70) nach Anspruch 6, worin die Zwischenplatte an dem Basisteil (56,71) fest angebracht und mit einem Abstand von dem Basisteil (56,71) durch Befestigungsmittel angeordnet ist.

9. Ein Element (50,70) nach einem der Ansprüche 1 bis 5, worin die vorstehende Zunge (58) einstückig mit dem Basisteil (56,71) gebildet ist.

10. Ein Element (50,70) nach einem der Ansprüche 6, 7 oder 8, worin die vorstehende Zunge (58) einstückig mit der Zwischenplatte gebildet ist.

11. Ein Element (50,70) nach einem der vorhergehenden Ansprüche, worin zumindest das Führungsteil (in Hinsicht auf die Einführungsrichtung) der vorstehenden Zunge (58) gekrümmt, gebogen oder abgewinkelt vom Boden-Berührungsteil (51,72) ist.

12. Ein Raupenglied (10) einer gelenkigen Raupenkette für Fahrzeuge, umfassend ein Basisteil (11,12), ein Antriebs-Empfangsteil und Mittel zur gelenkigen Verbindung des Raupengliedes (10) an angrenzende Raupenglieder (10), worin das Basisteil (11,12) ein Boden-Berührungselement-Empfangsteil (18,19) enthält, das durch gegenüberliegende Seitenwände (20,21) und eine Endwand (22) definiert wird, wobei jede dieser gegenüberliegenden Seitenwände (20) eine Rille (24) enthält, die sich entlang mindestens eines Teils ihrer Länge zur Aufnahme seitlich vorstehender Flügel eines Boden-Berührungselementes (50,70) erstreckt, und eine Ausnehmung (25), die in dieser Endwand (22) zur Aufnahme einer vorstehenden Zunge (58) des Boden-Berührungselementes (50,70) gebildet ist.

13. Ein Raupenglied (10) nach Anspruch 12, worin die Rillen (24) sich über nicht mehr als die Hälfte der Länge der jeweiligen Seitenwand (20,21) erstrecken.

14. Eine gelenkige Raupenkette für Fahrzeuge, enthaltend Boden-Berührungselemente (50,70) nach einem der Ansprüche 1 bis 10 und Raupenglieder nach Anspruch 12 oder 13.

## Revendications

1. Elément de contact sur le sol (50, 70) destiné à être utilisé dans un maillon (10) de chenille d'une chenille articulée de véhicule, l'élément (50, 70) comprenant une partie de base (56, 71) et une partie de contact avec le sol (51, 72), dans lequel l'élément (50, 70) comprend sur des faces respectives (53) au moins une aile en saillie latérale (57) adaptée pour être reçue dans une gorge correspondante (24) d'un maillon de chenille (10), et une languette en saillie (58) s'étendant à partir d'une extrémité (54) dudit élément et adaptée pour être au moins partiellement reçue dans un évidement correspondant (25) du maillon de chenille (10), et dans lequel l'aile ou les ailes (57) de chaque côté respectif (53) de l'élément (50, 70) possède(nt) une longueur totale qui est inférieure à la longueur de l'élément de contact avec le sol (50, 70).

2. Elément (50, 70) suivant la revendication 1, comprenant une seule aile (57) sur chaque face.

3. Elément (50, 70) suivant la revendication 2, dans lequel la longueur de chaque aile (57) n'est pas plus grande que la moitié de la longueur de l'élément de contact avec le sol (50, 70).

4. Elément (50, 70) suivant la revendication 3, dans lequel les ailes (57) sont formées en direction de l'extrémité (55) de l'élément de contact avec le sol (50, 70) à distance de la languette en saillie (58).

5. Elément (50, 70) suivant l'une quelconque des revendication précédentes, dans lequel les ailes (57) sont formées d'une pièce avec la partie de base (56, 71).

6. Elément (50, 70) suivant l'une quelconque des revendication 1 à 4, comprenant en outre une plaque intermédiaire disposée sur la partie de base (56, 71), et dans lequel les ailes (57) sont formées d'une pièce avec ladite plaque intermédiaire.

7. Elément (50, 70) suivant la revendication 6, comprenant en outre une couche de matériau élastomère entre la partie de base (56, 71) et la plaque intermédiaire.

8. Élément (50, 70) suivant la revendication 6, dans lequel la plaque intermédiaire est fixée rigidement à la partie de base (56, 71) et espacée de la partie de base (56, 71) par des moyens de fixation.

9. Elément (50, 70) suivant l'une quelconque des revendication 1 à 5, dans lequel la languette en saillie (58) est formée d'une pièce avec la partie de base (56, 71).

10. Elément (50, 70) suivant la revendication 6, 7, ou 8, dans lequel la languette en saillie (58) est formée d'une pièce avec la plaque intermédiaire.

11. Elément (50, 70) suivant l'une quelconque des revendication précédentes, dans lequel au moins la partie d'attaque (définie par rapport à la direction d'insertion) de la languette an saillie (58) est incurvée, cintrée ou inclinée à partir de la partie de contact avec le sol (51, 72).

12. Maillon de chenille (10) d'une chenille articulée de véhicule comprenant une partie de base (11, 12), une partie de réception d'organe d'entraînement, et des moyens de liaison articulés du maillon de chenille (10) à des maillons de chenille (10) adjacents, dans lequel la partie de base (11, 12) comporte une partie (18, 19) de réception d'un élément de contact avec le sol définie par des parois latérales opposées (20, 21) et une paroi d'extrémité (22), chacune desdites parois latérales opposées (20) comprenant une gorge (24) s'étendant le long d'au moins une partie de sa longueur pour recevoir des ailes en saillie latérale d'un élément de contact avec le sol le long d'au moins une partie de sa longueur pour recevoir des ailes en saillie latérale d'un élément de contact avec le sol (50, 70), et un évidement (25) formé dans ladite paroi d'extrémité (22) pour recevoir une languette en saillie (58) de l'élément de contact avec le sol (50, 70).

13. Maillon de chenille (10) suivant la revendication 12, dans lequel lesdites gorges (24) ne s'étendent pas sur plus que la moitié de la longueur de la paroi latérale respective (20, 21).

14. Chenille articulée de véhicule comportant des éléments de contact avec le sol (50, 70) suivant l'une quelconque des revendications 1 à 10 et des maillons de chenille suivant la revendication 12 ou 13.
